# FASCICULE DE BREVET EUROPEEN

(11) **EP 3 559 425 B1**
(45) Date de publication et mention de la délivrance du brevet: **16.02.2022**
(21) Numéro de dépôt: 17816728.4
(22) Date de dépôt: 12.12.2017
(51) Int. Cl.: F01P 7/16, B60H 1/00, H01M 10/625, B60L 58/26, H01M 10/613, H01M 10/6568, H01M 10/663

(54) **PROCÉDÉ DE PILOTAGE D'UN SYSTÈME DE REFROIDISSEMENT POUR UN VÉHICULE HYBRIDE COMPORTANT UN CIRCUIT DE TRANSFERT DE LIQUIDE DE REFROIDISSEMENT**
VERFAHREN ZUM BETRIEB EINES KÜHLSYSTEMS FÜR EIN HYBRIDES ELEKTROFAHRZEUG MIT EINEM KÜHLFLÜSSIGKEITSTRANSFERKREIS
METHOD FOR OPERATING A COOLING SYSTEM FOR A HYBRID ELECTRIC VEHICLE COMPRISING A LIQUID COOLANT TRANSFER CIRCUIT

(30) Priorité: 26.12.2016 FR 1663384
(43) Date de publication de la demande: 30.10.2019
(73) Titulaire: Renault S.A.S., 92100 Boulogne-Billancourt (FR)
(72) Inventeur: ANDRES, Emmanuelle, 92100 Boulogne Billancourt (FR); BEISBARDT, Olivier, 91470 Forges les Bains (FR)
(86) Numéro de dépôt international: PCT/EP2017/082426
(87) Numéro de publication internationale: WO 2018/121981

(56) Documents cités:
- DE-A1-102007 004 979
- DE-A1-102011 118 898
- DE-A1-102013 209 045
- DE-A1-102015 101 186
- DE-A1-102015 106 336
- US-B1- 6 575 258

## Description

### DOMAINE TECHNIQUE DE L'INVENTION

L'invention concerne un procédé de pilotage d'un système de refroidissement pour un véhicule hybride comportant un circuit de transfert de liquide de refroidissement.

L'invention concerne plus particulièrement un procédé de pilotage d'un système de refroidissement pour un véhicule hybride comportant au moins un moteur thermique et un moteur électrique, le système de refroidissement comportant au moins :
- un circuit de refroidissement haute température pour refroidir le moteur thermique et un circuit de refroidissement basse température pour refroidir le moteur électrique et une batterie haute tension associée, et
- un circuit de transfert de liquide de refroidissement reliant le circuit de refroidissement haute température et le circuit de refroidissement basse température et comportant des moyens de régulation pour contrôler la circulation du liquide de refroidissement dans le circuit de transfert.

### ÉTAT DE LA TECHNIQUE

On connaît de l'état de la technique de tels systèmes de refroidissement équipant un véhicule hybride, encore appelé « PHEV », acronyme en anglais de « *Plug-in Hybrid Electric Véhiculé ».*

D'une manière générale, on distingue différents modes de fonctionnement pour un véhicule hybride, à savoir :
- un mode électrique, aussi parfois appelé « ZEV » acronyme en anglais de « *Zero Emission Vehicule* », dans lequel le véhicule est propulsé et/ou tracté par le moteur électrique sans intervention du moteur thermique ;
- un mode thermique dans lequel le véhicule est tracté et/ou propulsé au moyen du seul moteur thermique sans intervention du moteur électrique ;
- un mode hybride dans lequel le véhicule est tracté et/ou propulsé simultanément au moyen des moteurs thermique et électrique.

Le démarrage d'un véhicule hybride est généralement réalisé en mode électrique. Toutefois, il arrive que le démarrage en mode électrique ne puisse parfois pas être effectué en raison des conditions atmosphériques, lorsque les températures sont basses, typiquement inférieures à -20°C.

En effet, la batterie haute tension associée au moteur électrique est alors rendue inopérante si la température est inférieure à une température (Tu) d'utilisation déterminée.

De manière non limitative, la température (Tu) d'utilisation d'une batterie haute tension est par exemple comprise entre 0°C et 34°C.

Néanmoins, la valeur de la température (Tu) d'utilisation est susceptible de varier d'un type de batterie à un autre, en fonction notamment de la technologie et plus particulièrement des électrolytes utilisés.

Lorsque la température de la batterie est inférieure à la température (Tu) d'utilisation, il est alors impossible de procéder au démarrage du véhicule hybride avec le moteur électrique et le démarrage ne peut par conséquent s'effectuer qu'avec le moteur thermique.

Sous réserve d'autres paramètres de fonctionnement du véhicule, notamment de la vitesse ou la charge de la batterie, le choix du mode de fonctionnement du véhicule hybride s'en trouve ensuite affecté puisque l'utilisation du mode électrique est alors différée jusqu'à ce que la température de la batterie soit au moins égale à ladite température (Tu) d'utilisation.

Pour estimer la température de la batterie haute tension et déterminer si cette condition d'utilisation du mode électrique est remplie, on mesure avantageusement la température du liquide de refroidissement dans le circuit de refroidissement basse température qui, destiné à refroidir la batterie associée au moteur électrique, est considérée comme représentative.

Dans la suite de la présente description, le terme « liquide de refroidissement » doit être interprété de manière large comme se référant à un fluide caloporteur susceptible d'être indifféremment utilisé pour refroidir mais également pour réchauffer en réalisant un apport de calories.

Dans ce qui suit le terme circuit de refroidissement haute température est un circuit de refroidissement dans lequel le fluide caloporteur a une température qui est supérieure à celle d'un fluide caloporteur circulant dans un autre circuit de refroidissement, alors qualifié par comparaison de circuit de refroidissement basse température.

Après un démarrage du véhicule hybride dans de telles conditions de températures extérieures basses ou négatives, on souhaite pouvoir rouler en mode électrique aussi rapidement que possible et cela afin notamment de réduire les émissions polluantes comme le dioxyde de carbone (CO₂) liés à la traction et/ou la propulsion du véhicule en mode thermique.

On recherche par conséquent des solutions susceptibles de permettre de réchauffer la batterie pour atteindre plus rapidement au moins ladite température (Tu) d'utilisation et ainsi permettre une utilisation du véhicule hybride en mode électrique, sous réserve bien entendu que toutes les conditions de fonctionnement correspondant à ce mode soient réunies.

Le document US6575258 B1 divulgue un système de cogénération de courant électrique et de chaleur contrôlée pour un véhicule électrique hybride.

Le but de l'invention est notamment de proposer un procédé de pilotage d'un système de refroidissement pour un véhicule hybride permettant d'accélérer la montée en température du liquide de refroidissement du circuit de refroidissement basse température associé au moteur électrique afin de pouvoir utiliser plus rapidement le véhicule en mode électrique.

### BREF RESUME DE L'INVENTION

Dans ce but, l'invention propose un procédé de pilotage d'un système de refroidissement pour un véhicule hybride du type décrit précédemment, caractérisé en ce que le procédé de pilotage du système de refroidissement comporte, lors d'un démarrage du véhicule, au moins :
- une première étape consistant à vérifier si le liquide de refroidissement présent dans le circuit de refroidissement basse température est à une température inférieure à une température d'utilisation de la batterie haute tension du moteur électrique ;
- lorsque la température du liquide de refroidissement dans le circuit de refroidissement basse température est inférieure à la température d'utilisation de la batterie, une deuxième étape consistant à démarrer le moteur thermique ;
- une troisième étape consistant à commander en position ouverte les moyens de régulation du circuit de transfert pour, en établissant une circulation de liquide de refroidissement entre le circuit de refroidissement haute température et le circuit de refroidissement basse température, accélérer une montée en température du liquide de refroidissement dans le circuit de refroidissement basse température afin de réchauffer la batterie jusqu'à atteindre au moins ladite température d'utilisation.

Avantageusement, le procédé de pilotage du système de refroidissement selon l'invention permet au liquide de refroidissement circulant dans le circuit de refroidissement haute température de récupérer les calories produites par le moteur thermique en fonctionnement et de transférer ensuite, grâce au circuit de transfert, ces calories à la batterie pour la réchauffer lorsque ce même liquide de refroidissement circule ensuite dans le circuit de refroidissement basse température.

Grâce à l'invention, on accélère la montée en température du liquide de refroidissement circulant dans le circuit de refroidissement basse température et ce faisant on réchauffe par l'intermédiaire de ce liquide de refroidissement la batterie qui atteint dès lors plus rapidement une température supérieure ou égale à la température d'utilisation.

Le procédé de pilotage du système de refroidissement permet une utilisation plus rapide du mode électrique après un démarrage en mode thermique tout particulièrement lorsqu'il est rendu nécessaire par des conditions de température comme celle d'utilisation de la batterie.

Le véhicule hybride est susceptible de fonctionner plus rapidement en mode électrique au bénéfice alors d'une réduction des émissions polluantes liées au fonctionnement en mode thermique.

Avantageusement, l'invention permet d'éviter d'avoir notamment recours à des moyens de chauffage additionnel, tels que des thermistances de type CTP ou THP, susceptibles d'être utilisés pour chauffer le liquide de refroidissement du circuit de refroidissement basse température associé au moteur électrique afin d'obtenir une accélération de la montée en température du liquide de refroidissement et donc incidemment de la température de la batterie.

Grâce aux moyens de régulation commandés selon le procédé, on établit sélectivement par le circuit de transfert une mise en communication du circuit de refroidissement haute température et du circuit de refroidissement basse température.

Le circuit de transfert ne modifie pas le fonctionnement général du système de refroidissement du véhicule hybride, notamment lors de l'alternance des phases de roulage électrique et thermique.

Le système de refroidissement et plus particulièrement le circuit de transfert comportant les moyens de régulation permet de procéder sélectivement, par l'intermédiaire du liquide de refroidissement, à des échanges de calories entre le circuit de refroidissement haute température et le circuit de refroidissement basse température.

Dans le cas précité de l'impossibilité d'un démarrage en mode électrique en raison d'une température ne permettant pas une utilisation de la batterie, le transfert de calories par le liquide de refroidissement s'opère alors du circuit de refroidissement haute température vers le circuit de refroidissement basse température.

Cependant, il est également possible dans d'autre cas que le démarrage d'opérer un transfert de calories par le liquide de refroidissement en sens opposé, c'est-à-dire du circuit de refroidissement basse température vers le circuit de refroidissement haute température.

En effet, lors d'une phase de roulage en mode électrique, les organes tels que la batterie, l'électronique de puissance et le moteur électrique transfèrent des calories au liquide de refroidissement du circuit de refroidissement basse température.

Les calories produites par ces organes vont chauffer le liquide de refroidissement du circuit de refroidissement basse température jusqu'à atteindre une température optimale de fonctionnement, par exemple comprise préférentiellement entre 20°C et 40°C. Le circuit de refroidissement basse température régule la température du liquide de refroidissement en dessous d'une température maximale de 60°C.

Si le roulage en mode électrique se poursuit, on recherche alors à évacuer des calories pour pouvoir maintenir cette température optimale de fonctionnement des organes comme le moteur électrique ou la batterie.

C'est la raison pour laquelle, le circuit de refroidissement basse température comporte en outre au moins un radiateur de refroidissement et préférentiellement un refroidisseur.

Dans le cas d'une poursuite du roulage en mode électrique, l'ouverture des moyens de régulation pour établir une circulation du liquide de refroidissement permet de transférer des calories du circuit de refroidissement basse température vers le circuit de refroidissement haute température.

En effet, la température du liquide de refroidissement dans le circuit de refroidissement basse température est alors supérieure à celle du liquide de refroidissement présent dans le circuit de refroidissement haute température associé au moteur thermique.

Comme dans le cas précité du démarrage, le procédé de pilotage agit sur les moyens de régulation du circuit de transfert pour les commander en position ouverte afin de réaliser par l'intermédiaire du liquide de refroidissement ce transfert de calories du circuit de refroidissement basse température vers le circuit de refroidissement haute température.

Avantageusement, on améliore le refroidissement du liquide circulant dans le circuit de refroidissement basse température grâce à une régulation thermique permettant d'y maintenir une température optimale de fonctionnement des organes utilisés en mode électrique, comme le moteur électrique et la batterie.

La régulation de la température du liquide de refroidissement circulant lors du mode électrique est améliorée, d'une part, par l'inertie due à la plus grande quantité de liquide de refroidissement et, d'autre part, par les échanges thermiques réalisés avec l'air extérieur par le radiateur de refroidissement du circuit de refroidissement haute température.

S'agissant de l'inertie, le liquide de refroidissement n'est en effet plus seulement celui présent dans le seul circuit de refroidissement basse température circulant en boucle fermée mais celui de l'ensemble du système, c'est à dire également le liquide de refroidissement présent dans le circuit de refroidissement haute température et dans le circuit de transfert.

Le procédé de pilotage du système de refroidissement comportant le circuit de transfert permet de réaliser, en mode électrique, une régulation de la température du liquide de refroidissement pour la maintenir à une température de fonctionnement optimale pour laquelle on améliore notamment le rendement de la batterie.

Avantageusement, une telle régulation de la température du liquide de refroidissement en mode électrique participe à accroître la fiabilité des composants électroniques et à en améliorer significativement la durabilité.

La régulation de la température du liquide de refroidissement à une température optimale permet également d'améliorer le fonctionnement général, en particulier le rendement de l'électronique de puissance, de la batterie ainsi que du moteur électrique et de sorte que l'exploitation de la capacité de la batterie s'en trouve améliorée.

Outre le cas du démarrage dans des conditions de températures basses ou négatives décrit précédemment et celui de la régulation de la température du liquide de refroidissement pour optimiser le fonctionnement en mode électrique, le procédé de pilotage du système de refroidissement peut encore commander le circuit de transfert pour améliorer le fonctionnement dans au moins un autre cas.

En effet, après une utilisation du véhicule en mode électrique, lorsque l'on change de mode de fonctionnement pour passer en mode thermique, par exemple en raison de la vitesse atteinte par le véhicule, le procédé de pilotage peut ouvrir les moyens de régulation du circuit de transfert pour établir une circulation de liquide de refroidissement du circuit de refroidissement basse température vers le circuit de refroidissement haute température.

On réalise alors par l'intermédiaire du liquide de refroidissement un transfert de calories du circuit de refroidissement basse température vers le circuit de refroidissement haute température associé au moteur thermique permettant d'accélérer la montée en température jusqu'à atteindre, comme pour le mode électrique, une température optimale du liquide de refroidissement pour le fonctionnement en mode thermique.

Avantageusement, un tel transfert de calories permet dans ce cas d'accélérer la montée en température du liquide de refroidissement dans le circuit de refroidissement haute température afin de pouvoir notamment mettre en action plus rapidement un dispositif de dépollution comme l'EGR basse pression.

Le procédé de pilotage selon l'invention propose d'utiliser avantageusement des calories produites en mode électrique ou en mode thermique pour les apporter sélectivement selon le cas à l'un ou à l'autre des circuits de refroidissement.

### Selon d'autres caractéristiques de l'invention :

- lorsque le moteur thermique est démarré à la deuxième étape, le procédé de pilotage démarre au moins une pompe associée au moteur thermique ;
- le procédé de pilotage comporte une étape consistant à ouvrir une vanne de régulation destinée à contrôler la circulation du liquide de refroidissement dans une conduite comportant la batterie haute tension associée au moteur électrique ;
- le procédé de pilotage comporte une étape consistant à démarrer au moins une pompe agencée dans une boucle de refroidissement du circuit de refroidissement basse température ;
- le procédé de pilotage comporte une étape consistant à démarrer au moins une pompe agencée dans une boucle de refroidissement du circuit de refroidissement basse température ;
- la première étape de vérification de la température du liquide de refroidissement circulant dans le circuit de refroidissement est effectuée de manière itérative ;
- si la température du liquide de refroidissement circulant dans le circuit de refroidissement basse température est inférieure à ladite température d'utilisation de la batterie haute tension, le procédé de pilotage maintient alors au moins le moteur thermique en fonctionnement et les moyens de régulation du circuit de transfert en position ouverte ;
- si la température du liquide de refroidissement circulant dans le circuit de refroidissement basse température est inférieure à ladite température d'utilisation de la batterie haute tension, le procédé de pilotage maintient alors la vanne de régulation en position ouverte ;
- si la température du liquide de refroidissement circulant dans le circuit de refroidissement basse température est supérieure ou égale à ladite température d'utilisation de la batterie haute tension et que la charge de la batterie est suffisante, le procédé de pilotage éteint alors le moteur thermique et démarre le moteur électrique pour un roulage du véhicule en mode électrique ;
- lors du démarrage du moteur électrique, le procédé de pilotage comporte une étape consistant à commander sélectivement les moyens de régulation du circuit de transfert en position fermée ou en position ouverte ;
- lors du démarrage du moteur électrique, le procédé de pilotage maintient les moyens de régulation du circuit de transfert en position ouverte lorsque une demande de chauffage existe afin d'apporter des calories à un aérotherme que comporte le circuit de refroidissement haute température ;
- lorsque la température du liquide de refroidissement circulant dans le circuit de refroidissement basse température est supérieure à une température de fonctionnement optimal de la batterie haute tension, le procédé de pilotage comporte alors une étape consistant à commander la vanne de régulation en position fermée pour interrompre la circulation du liquide de refroidissement dans la deuxième conduite comportant la batterie haute tension.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

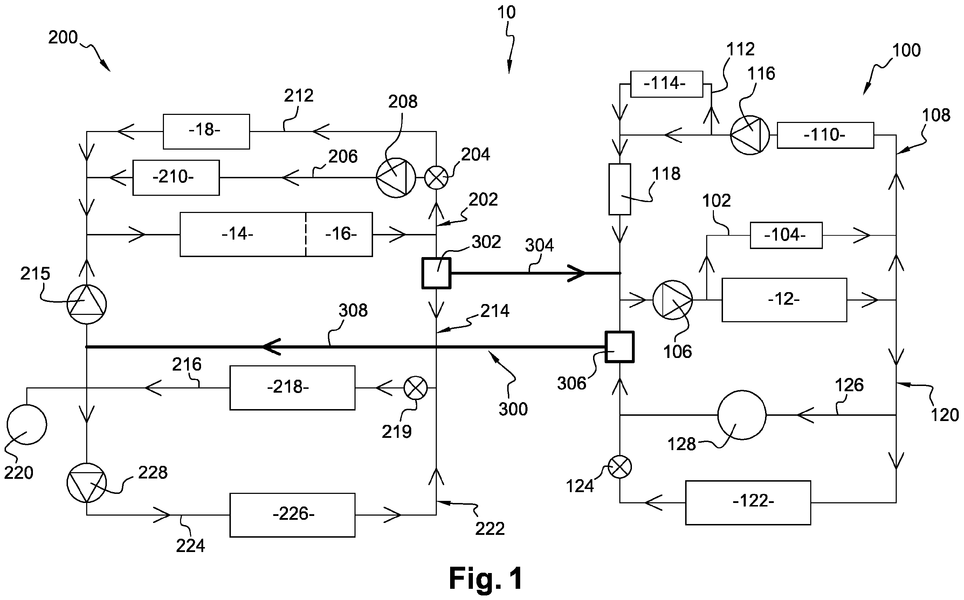

- la figure 1 est une représentation schématique d'un système de refroidissement pour un véhicule hybride selon un exemple de réalisation et qui illustre un circuit de transfert comportant des moyens de régulation pour contrôler sélectivement la circulation du liquide de refroidissement à travers le circuit de transfert reliant respectivement un circuit de refroidissement haute température et un circuit de refroidissement basse température ;

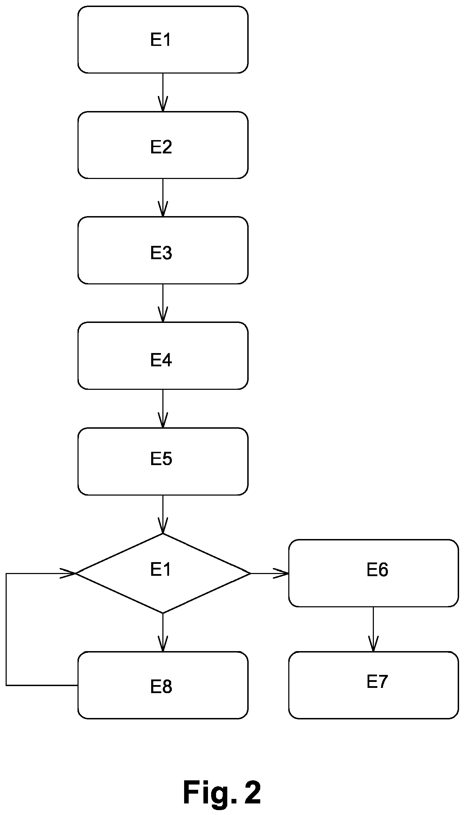

- la figure 2 est un diagramme logique qui représente les étapes d'un procédé de pilotage selon l'invention pour commander un système de refroidissement selon la figure 1 et qui illustre la stratégie de pilotage du système de refroidissement lorsque un démarrage du véhicule hybride en mode électrique ne peut être effectué en raison d'une température de batterie haute tension qui n'est pas au moins égale à une température d'utilisation requise ;

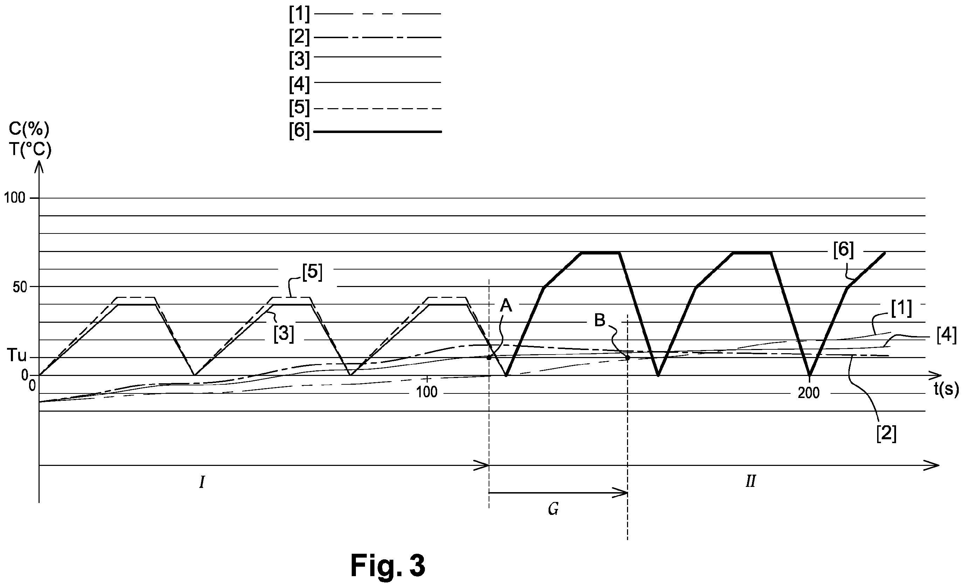

- la figure 3 est une représentation graphique qui représente différentes courbes illustrant le fonctionnement d'un système de refroidissement selon la figure 1 et qui illustre pour l'ordonnée d'une part les températures du liquide de refroidissement dans les circuits de refroidissement haute et basse températures et, d'autre part, la charge « C » des moteurs thermique et électrique (exprimées en pourcentage %), les courbes correspondantes étant représentées en fonction du temps (exprimé en secondes) porté en abscisse.

### DESCRIPTION DETAILLEE DES FIGURES

On a représenté sur la figure 1, un exemple de réalisation d'un système 10 de refroidissement pour un véhicule hybride (non représenté).

Un tel véhicule hybride est encore appelé « PHEV », acronyme en anglais de « *Plug-in Hybrid Electric Vehicule* » et se caractérise par le fait de comporter un moteur 12 thermique d'une part, et un moteur 14 électrique, d'autre part.

Le véhicule hybride est susceptible d'être utilisé selon différents modes de fonctionnement qui comportent :
- un mode électrique, aussi parfois appelé « ZEV » acronyme en anglais de « *Zero Emission Vehicule* », dans lequel le véhicule est propulsé et/ou tracté par le moteur électrique sans intervention du moteur thermique ;
- un mode thermique dans lequel le véhicule est tracté et/ou propulsé au moyen du seul moteur thermique sans intervention du moteur électrique ;
- un mode hybride dans lequel le véhicule est tracté et/ou propulsé simultanément au moyen des moteurs thermique et électrique.

Le moteur 14 électrique convertit l'énergie électrique en énergie mécanique durant les phases de traction du véhicule et inversement l'énergie mécanique en énergie électrique lors des phases de freinage (encore appelées « régénération »).

Pour son fonctionnement, le moteur 14 électrique est associé à différents organes dont au moins un convertisseur onduleur 16.

Le convertisseur 16 est le calculateur de puissance du moteur 14 électrique qui reçoit les paramètres de fonctionnement de multiples capteurs dont les pédales d'accélérateur et de frein afin de commander le moteur 14 en traction ou en régénération.

Une batterie 18 constitue un autre de ces organes, ladite batterie 18 stockant sous forme électrique l'énergie récupérée, cinétique ou potentielle. La batterie 18 est une batterie dite « haute tension » par comparaison à l'autre batterie notamment utilisée pour le démarrage du moteur 12 thermique.

La batterie 18 doit cependant être au moins à une température (Tu) d'utilisation pour pouvoir délivrer de l'énergie électrique au moteur 14 électrique.

De manière non limitative, la température (Tu) d'utilisation de la batterie 18 est par exemple de 10°C. L'une des conditions pour utiliser le véhicule hybride en mode électrique est que la batterie présente une température supérieure ou égale à ladite température (Tu) d'utilisation.

A défaut et tel qu'expliqué en préambule dans le cas d'un démarrage, le véhicule hybride doit être utilisé en mode thermique au moins jusqu'à ce que la batterie 18 atteigne une température supérieure ou égale à ladite température (Tu) d'utilisation permettant une utilisation du mode électrique.

Bien que non représentés en détails sur la figure 1, les autres organes associés au moteur 14 électrique comportent généralement au moins un convertisseur DC/DC et un chargeur, ou encore un alterno-démarreur.

Le convertisseur DC/DC permet de recharger la batterie 12V au moyen de la batterie 18 haute tension et d'alimenter des consommateurs électriques lors de l'activation du véhicule par la mise du contact tandis que le chargeur permet d'adapter l'énergie fournie par le réseau de distribution afin de recharger la batterie 18 haute tension.

Le système 10 de refroidissement comporte au moins un circuit 100 de refroidissement, dit circuit de refroidissement haute température.

Le circuit 100 de refroidissement haute température est utilisé pour refroidir au moins le moteur 12 thermique du véhicule hybride.

De préférence, le véhicule hybride est équipé d'au moins un dispositif de dépollution par recirculation des gaz d'échappement de type basse pression (non représenté).

Le dispositif de dépollution par recirculation des gaz d'échappement de type basse pression est en relation de transfert thermique avec le circuit 100 de refroidissement haute température.

Le circuit 100 de refroidissement haute température comporte au moins une conduite 102 de refroidissement, montée en dérivation par rapport au moteur 12, dans laquelle est agencé au moins un échangeur 104 thermique.

L'échangeur 104 thermique est destiné à refroidir des gaz d'échappement utilisés par le dispositif de dépollution par recirculation des gaz d'échappement de type basse pression.

Le circuit 100 de refroidissement haute température comporte au moins une pompe 106 agencée en amont du moteur 12 pour la mise en circulation d'un liquide de refroidissement à travers ledit circuit 100.

Le circuit 100 de refroidissement haute température comporte au moins une première boucle 108 de refroidissement reliée à la sortie du moteur 12 thermique et à l'entrée de la pompe 106.

La première boucle 108 de refroidissement du circuit 100 de refroidissement haute température comporte au moins un aérotherme 110 pour le chauffage du véhicule hybride.

La première boucle 108 de refroidissement du circuit 100 de refroidissement haute température comporte au moins une conduite 112 de refroidissement qui, en dérivation par rapport à la première boucle 108, comporte au moins un échangeur 114 thermique.

L'échangeur 114 thermique est destiné à refroidir les gaz d'échappement d'un autre dispositif de dépollution (non représenté) par recirculation des gaz d'échappement de type haute pression.

La première boucle 108 de refroidissement du circuit 100 de refroidissement haute température comporte au moins une pompe 116 additionnelle.

La pompe 116 est agencée en aval de l'aérotherme 110 et en amont de la conduite 112 de refroidissement associée au dispositif de dépollution par recirculation des gaz d'échappement de type haute pression.

De préférence, la première boucle 108 de refroidissement du circuit 100 de refroidissement haute température comporte un échangeur 118 thermique de type eau-huile pour le refroidissement de l'huile utilisée dans le moteur 12 thermique.

La circulation du liquide de refroidissement dans la première boucle 108 de refroidissement du circuit 100 de refroidissement haute température s'effectue suivant les flèches représentées sur la figure 1, soit une circulation selon un sens de rotation antihoraire.

Le circuit 100 de refroidissement haute température comporte au moins une deuxième boucle 120 de refroidissement reliée à la sortie du moteur 12 thermique et à l'entrée de la pompe 106.

La deuxième boucle 120 de refroidissement du circuit 100 de refroidissement haute température comporte au moins un radiateur 122 de refroidissement.

Le radiateur 122 est destiné à refroidir le liquide de refroidissement du circuit 100 de refroidissement haute température.

La deuxième boucle 120 de refroidissement du circuit 100 de refroidissement haute température comporte un thermostat 124 qui est agencé en aval du radiateur 122 de refroidissement.

La deuxième boucle 120 de refroidissement du circuit 100 de refroidissement haute température comporte au moins une conduite 126 dite de by-pass qui est montée en dérivation par rapport au radiateur 122 de refroidissement.

La conduite 126 comporte un vase 128 d'expansion pour assurer une fonction de dégazage du liquide de refroidissement.

La circulation du liquide de refroidissement dans la deuxième boucle 120 de refroidissement du circuit 100 de refroidissement haute température s'effectue suivant les flèches représentées sur la figure 1, soit une circulation selon un sens de rotation horaire.

Le système 10 de refroidissement comporte un circuit 200 de refroidissement, dit circuit de refroidissement basse température, pour refroidir au moins le moteur 14 électrique équipant le véhicule hybride.

Dans le circuit 100 de refroidissement haute température associé au moteur 12 thermique, le liquide de refroidissement atteint en fonctionnement des températures qui sont trop élevées, par exemple d'environ 90°C, pour que ce même liquide de refroidissement puisse être utilisé pour le refroidissement de certains organes associés au fonctionnement du moteur 14 électrique qui doivent être maintenus à des températures inférieures, par exemple inférieures à 60°C.

C'est la raison pour laquelle, le système 10 de refroidissement d'un véhicule hybride comporte d'une part un circuit 100 de refroidissement du moteur 12 thermique haute température et, d'autre part, un circuit 200 de refroidissement du moteur 14 électrique basse température.

Le circuit 200 de refroidissement basse température est également utilisé pour le refroidissement des autres organes précités associés au moteur 14 électrique pour assurer le fonctionnement du véhicule en mode électrique.

Le moteur 14 électrique est généralement associé à au moins un convertisseur onduleur 16, un chargeur, un convertisseur DC/DC, voir un alterno-démarreur.

Le circuit 200 de refroidissement basse température comporte au moins une première boucle 202 de refroidissement.

La première boucle 202 de refroidissement comporte au moins une vanne 204 de régulation, par exemple une vanne du type trois voies, pour réguler la circulation du liquide de refroidissement dans la première boucle 202.

La première boucle 202 de refroidissement comporte au moins une première conduite 206 comportant une pompe 208 électrique et un refroidisseur 210.

La première boucle 202 de refroidissement comporte au moins une deuxième conduite 212, parallèle à la première conduite 206, comportant la batterie 18 haute tension associée au moteur 14 électrique.

La vanne 204 de régulation est destinée à réguler la circulation du liquide de refroidissement dans la première conduite 206 et la deuxième conduite 212 formant respectivement la première boucle 202 de refroidissement du circuit 200 de refroidissement basse température.

La circulation du liquide de refroidissement dans la première boucle 202 de refroidissement du circuit 200 de refroidissement basse température s'effectue suivant les flèches représentées sur la figure 1, soit une circulation selon un sens de rotation antihoraire.

Le circuit 200 de refroidissement basse température comporte au moins une deuxième boucle 214 de refroidissement.

La deuxième boucle 214 de refroidissement comporte au moins une conduite 216 dans laquelle est agencé au moins un radiateur 218 pour refroidir le liquide de refroidissement circulant dans le circuit 200 de refroidissement basse température.

La deuxième boucle 214 de refroidissement comporte une pompe 215 électrique qui est agencée en aval du radiateur 218 de refroidissement de la conduite 216.

La deuxième boucle 214 de refroidissement du circuit 200 de refroidissement basse température comporte au moins un thermostat 219 qui est agencé en amont du radiateur 218 afin de contrôler la circulation du liquide de refroidissement dans la conduite 216, à travers le radiateur 218.

La circulation du liquide de refroidissement dans la deuxième boucle 214 de refroidissement s'effectue suivant les flèches représentées sur la figure 1, soit une circulation selon un sens de rotation horaire.

La deuxième boucle 214 de refroidissement du circuit 200 de refroidissement basse température comporte au moins un vase 220 d'expansion pour assurer une fonction de dégazage.

Le vase 220 d'expansion est par exemple agencé en aval du radiateur 218 de refroidissement destiné à refroidir le liquide de refroidissement dans le circuit 200 de refroidissement basse température.

Le circuit 200 de refroidissement basse température comporte au moins une troisième boucle 222 de refroidissement.

La troisième boucle 222 de refroidissement du circuit 200 de refroidissement basse température comporte au moins une première conduite 224 comportant au moins un refroidisseur 226 d'air de suralimentation.

De préférence, le refroidisseur 226 d'air de suralimentation est du type air-eau tel qu'encore désigné par l'acronyme anglais « WCAC » pour « *Water-cooled Charge Air Cooler ».*

La troisième boucle 222 de refroidissement du circuit 200 de refroidissement basse température comporte une pompe 228 électrique. La pompe 228 électrique est agencée en amont du refroidisseur 226 d'air de suralimentation.

En variante non représentée, la troisième boucle 222 de refroidissement du circuit de refroidissement basse température comporte une deuxième conduite, dite de by-pass, qui est montée en dérivation par rapport au refroidisseur 226 d'air de suralimentation agencé dans la première conduite 224.

L'intérêt d'établir une telle conduite de dérivation (ou « by-pass ») par rapport au refroidisseur 226 d'air de suralimentation réside dans la possibilité offerte de dériver sélectivement le liquide de refroidissement du circuit de refroidissement basse température. Avantageusement, des moyens de régulation tels qu'une vanne sont alors prévus.

Lorsque la température du liquide de refroidissement circulant dans le circuit de refroidissement basse température n'est pas assez élevée, en particulier inférieure à la température (Tu) d'utilisation de la batterie 18, le liquide de refroidissement est alors susceptible de prélever au niveau du refroidisseur 226 des calories de l'air de suralimentation pour accélérer l'augmentation de la température du liquide de refroidissement.

La circulation du liquide de refroidissement dans la troisième boucle 222 de refroidissement s'effectue suivant les flèches représentées sur la figure 1, soit une circulation selon un sens de rotation antihoraire.

Le système 10 de refroidissement comporte un circuit 300 de transfert de liquide de refroidissement reliant le circuit 100 de refroidissement haute température et le circuit 200 de refroidissement basse température.

Le circuit 300 de transfert est apte à transférer sélectivement, par l'intermédiaire du liquide de refroidissement, des calories entre l'un et l'autre desdits circuit de refroidissement haute température et circuit de refroidissement basse température en fonction du cas.

Le circuit 300 de transfert comporte des moyens de régulation qui sont commandés pour établir sélectivement une circulation de liquide de refroidissement à travers ledit circuit 300 de transfert de manière à transférer avec ledit liquide de refroidissement des calories entre le circuit 100 de refroidissement et le circuit 200 de refroidissement.

Les moyens de régulation comportent au moins une première vanne 302 associée à une première conduite 304 aller du circuit 300 de transfert et une deuxième vanne 306 associée à une deuxième conduite 308 retour du circuit 300 de transfert.

Les moyens 302, 306 de régulation sont commandés entre au moins une position de fermeture et une position d'ouverture dans laquelle une circulation du liquide de refroidissement est établie entre le circuit 100 de refroidissement et le circuit 200 de refroidissement.

La première conduite 304 aller du circuit 300 de transfert est raccordée en aval de l'échangeur 108 de la première boucle 108 de refroidissement du circuit 100 de refroidissement haute température.

La première conduite 304 aller du circuit 300 de transfert est raccordée entre les première et deuxième boucles 202, 214 de refroidissement du circuit 200 de refroidissement basse température, en amont de la deuxième boucle 214.

La première conduite 304 aller du circuit 300 de transfert se raccorde à la deuxième boucle 214 de refroidissement du circuit 200 de refroidissement basse température, en aval du moteur 14 électrique et en amont du radiateur 218 pour le refroidissement du liquide de refroidissement circulant dans le circuit 200 de refroidissement basse température.

La première vanne 302 est agencée en entrée de la première conduite 304 aller, à la jonction de ladite première conduite 304 aller avec le circuit 200 de refroidissement basse température.

La première conduite 304 aller du circuit 300 de transfert se raccorde à la première boucle 108 de refroidissement du circuit 100 de refroidissement haute température, par exemple et tel que représenté sur la figure 1 en amont de la pompe 106.

La deuxième conduite 308 retour du circuit 300 de transfert est raccordée en aval à la deuxième boucle 120 de refroidissement du circuit 100 de refroidissement haute température et en aval à la deuxième boucle 214 de refroidissement du circuit 200 de refroidissement basse température.

La deuxième conduite 308 retour du circuit 300 de transfert est raccordée à la deuxième boucle 214 de refroidissement du circuit 200 de refroidissement basse température en aval du radiateur 218 de refroidissement du liquide de refroidissement du circuit 200 de refroidissement basse température et en amont de la pompe 215 électrique.

La deuxième vanne 306 est agencée en entrée de la deuxième conduite 308 retour, à la jonction de ladite deuxième conduite 308 retour avec le circuit 100 de refroidissement haute température.

On a représenté sur la figure 2 un diagramme logique qui représente les différentes étapes mises en œuvre par le procédé de pilotage du système 10 de refroidissement qui vient d'être décrit en référence à la figure 1

Le procédé de pilotage du système 10 de refroidissement comporte, lors d'un démarrage du véhicule hybride, au moins une première étape E1 consistant à vérifier si le liquide de refroidissement présent dans le circuit 200 de refroidissement basse température est à une température inférieure à la température (Tu) d'utilisation de la batterie 18 haute tension du moteur 14 électrique.

La première étape E1 de vérification consiste à mesurer la température du liquide de refroidissement dans le circuit 200 de refroidissement basse température, de préférence à proximité de la batterie 18.

Puis, la première étape E1 consiste à comparer la température du liquide de refroidissement ainsi mesurée dans le circuit 200 de refroidissement basse température avec la température (Tu) d'utilisation de la batterie 18 pour déterminer si ladite température du liquide de refroidissement dans le circuit 200 de refroidissement basse température est inférieure à la température d'utilisation de la batterie 18.

Tel qu'expliqué précédemment, le véhicule ne peut démarrer en mode électrique que si la batterie 18 est à une température supérieure ou égale à ladite température (Tu) d'utilisation, qui est par exemple ici de l'ordre de 10°C.

Le procédé de pilotage du système 10 de refroidissement comporte au moins une deuxième étape E2 consistant, lorsque la température du liquide de refroidissement dans le circuit 200 de refroidissement basse température est inférieure à ladite température (Tu) d'utilisation de la batterie 18, à démarrer le moteur 12 thermique du véhicule.

En effet, à défaut de pouvoir démarrer le véhicule hybride en mode électrique, on procède alors à un démarrage du moteur 12 thermique de sorte que le véhicule fonctionne en mode thermique.

Le démarrage du moteur 12 thermique s'accompagne d'une production de chaleur dont les calories vont être transférées au liquide de refroidissement qui, présent dans le circuit 100 de refroidissement haute température, circule notamment à travers le moteur 12 thermique.

Le procédé de pilotage procède lors de la deuxième étape E2 au démarrage de la pompe 106 associée au moteur 12 thermique lorsque ledit moteur 12 thermique est démarré, c'est à dire lorsque la première étape E1 détermine que la température du liquide de refroidissement dans le circuit 200 de refroidissement basse température est inférieure à la température d'utilisation de la batterie 18.

La pompe 106 associée au moteur 12 thermique permet d'établir une circulation du liquide de refroidissement dans le circuit 100 de refroidissement haute température et ce faisant que les calories produites par le moteur 12 thermique en fonctionnement soient transférées au liquide de refroidissement dont la température va alors s'élever.

Le thermostat 124 agencé en aval du radiateur 122 dans le circuit 100 de refroidissement est en position fermée dès lors que la température de seuil d'ouverture n'est pas atteinte, le radiateur 122 ne dissipe pas conséquent pas les calories transférées au liquide de refroidissement dont la température augmente de ce fait plus rapidement.

Le procédé de pilotage du système 10 de refroidissement comporte au moins une troisième étape E3 consistant à commander en position ouverte les moyens 302, 306 de régulation du circuit 300 de transfert pour établir une circulation de liquide de refroidissement entre le circuit 100 de refroidissement haute température et le circuit 200 de refroidissement basse température.

Dans l'exemple de réalisation du système 10 de refroidissement, le procédé commande l'ouverture de la première vanne 302 et de la deuxième vanne 306 formant respectivement lesdits moyens de régulation du circuit 300 de transfert et la communication entre le circuit 100 de refroidissement haute température et le circuit 200 de refroidissement basse température est alors établie.

Le liquide de refroidissement est alors susceptible de circuler, au travers des première conduite 304 et deuxième conduite 308 du circuit 300 de transfert, entre le circuit 100 de refroidissement haute température et le circuit 200 de refroidissement basse température.

Grâce à cette circulation du liquide de refroidissement, on transfère alors les calories produites par le moteur 12 thermique du circuit 100 de refroidissement haute température vers le circuit 200 de refroidissement basse température grâce à quoi la température du liquide de refroidissement circulant dans le circuit 200 de refroidissement basse température augmente.

Les calories produites par le moteur 12 thermique sont ainsi transportées par le liquide de refroidissement commun, du circuit 100 de refroidissement haute température vers le circuit 200 de refroidissement basse température, afin de venir réchauffer la batterie 18 haute tension.

Le thermostat 219 est en position fermée dès lors que la température de seuil d'ouverture n'est pas atteinte.

Le radiateur 218 de refroidissement n'est par conséquent pas traversé par le liquide de refroidissement, aucune calorie n'est dissipée par le radiateur 218 et toutes les calories transférées sont utilisées pour réchauffer la batterie 18.

Dans le système 10 de refroidissement selon l'exemple de réalisation, la batterie 18 est agencée dans la deuxième conduite 212 en aval de la vanne 204 de régulation qui doit par conséquent être commandée en ouverture pour autoriser une circulation du liquide de refroidissement jusqu'à la batterie 18 haute tension à réchauffer.

Le procédé de pilotage comporte une quatrième étape E4 consistant à ouvrir la vanne 204 de régulation destinée à contrôler la circulation du liquide de refroidissement dans la deuxième conduite 212 comportant la batterie 18 haute tension associée au moteur 14 électrique.

La quatrième étape E4 permet d'ouvrir la vanne 204 de régulation qui contrôle la circulation du liquide de refroidissement entre au moins la première conduite 206 comportant la pompe 208 électrique et le refroidisseur 210 et ladite deuxième conduite 212, parallèle à la première conduite 206, comportant la batterie 18 haute tension associée au moteur 14 électrique.

Le liquide de refroidissement est utilisé comme fluide caloporteur pour réchauffer la batterie 18 haute tension afin que sa température augmente pour devenir au moins égale et avantageusement supérieure, à ladite température (Tu) d'utilisation de la batterie 18.

En effet, une fois ladite température (Tu) d'utilisation de la batterie 18 atteinte le véhicule hybride est alors susceptible d'être utilisé en mode électrique sous réserve que l'ensemble des autres conditions nécessaire au fonctionnement dans ce mode soient remplies telles qu'un état de charge suffisant.

Pour procéder à la mise en circulation du liquide de refroidissement dans la deuxième conduite 212 comportant la batterie 18, mais plus généralement dans le circuit 200 de refroidissement basse température, le procédé de pilotage comporte une cinquième étape E5 consistant au moins à démarrer la pompe 215 agencée dans la deuxième boucle 214 de refroidissement du circuit 200 de refroidissement basse température. Le thermostat 219 bloque la circulation du liquide de refroidissement au travers du radiateur 218.

La cinquième étape E5 du procédé de pilotage consiste à démarrer également la pompe 228 agencée dans la troisième boucle 222 de refroidissement du circuit 200 de refroidissement basse température afin d'utiliser les calories issues de l'air comprimé passant au travers de l'échangeur 226 de type WCAC. La première étape E1 de vérification de la température du liquide de refroidissement circulant dans le circuit 200 de refroidissement est avantageusement effectuée de manière itérative, c'est à dire répétée à un intervalle de temps donné.

Si la première étape E1 de vérification détermine que la température du liquide de refroidissement circulant dans le circuit 200 de refroidissement basse température est inférieure à ladite température d'utilisation de la batterie 18 haute tension, le procédé de pilotage maintient alors au moins le moteur 12 thermique en fonctionnement et les moyens 302, 306 de régulation du circuit 300 de transfert en position ouverte.

Dans l'exemple de réalisation du système 10 de refroidissement selon la figure 1, si la première étape E1 de vérification détermine que la température du liquide de refroidissement circulant dans le circuit 200 de refroidissement basse température est inférieure à ladite température d'utilisation de la batterie 18 haute tension, le procédé de pilotage maintient alors également la vanne 204 de régulation en position ouverte pour poursuivre le réchauffement de la batterie 18 par le liquide de refroidissement.

Si la première étape E1 de vérification détermine que la température du liquide de refroidissement circulant dans le circuit 200 de refroidissement basse température est supérieure ou égale à ladite température (Tu) d'utilisation de la batterie 18 haute tension, une utilisation du véhicule en mode électrique est alors possible sous réserve bien entendu que les autres conditions éventuelles soient également remplies.

Ainsi la batterie 18 étant au moins à sa température (Tu) d'utilisation, si la charge de la batterie 18 est suffisante, le procédé de pilotage éteint alors le moteur 12 thermique et démarre le moteur 14 électrique pour un roulage du véhicule en mode électrique.

Le procédé de pilotage comporte une sixième étape E6 consistant à commander sélectivement, en fonction de certains paramètres, les moyens 302, 306 de régulation du circuit 300 de transfert en position fermée ou en position ouverte.

Selon une première possibilité, lors du démarrage du moteur 14 électrique, la sixième étape E6 du procédé de pilotage consiste à commander les moyens 302, 306 de régulation du circuit 300 de transfert en position fermée.

Le circuit 200 de refroidissement basse température n'est alors plus en communication avec le circuit 100 de refroidissement haute température à travers le circuit 300 de transfert.

La température du liquide de refroidissement présent dans le circuit 200 de refroidissement basse température va continuer d'augmenter sous l'effet des calories qui lui sont transférées par les organes en fonctionnement en mode électrique.

Avantageusement, on recherche alors à ce que la température du liquide de refroidissement dépasse la température (Tu) d'utilisation de la batterie 18 pour atteindre une température optimale de fonctionnement des organes comme le moteur 14 ou la batterie 18 en mode électrique.

La température optimale de fonctionnement en mode électrique est notamment, mais non exclusivement, déterminée en fonction de la batterie 18 et par exemple comprise entre 20°C et 40°C.

Bien entendu et comme expliqué précédemment pour la valeur de la température (Tu) d'utilisation, la valeur de référence pour la température optimale varie en fonction du type de batterie 18 haute tension.

Toutefois et selon une autre possibilité, si lors du démarrage du moteur 14 électrique une demande de chauffage de l'habitacle du véhicule existe, le procédé de pilotage ne procède pas à la fermeture mais maintient les moyens 302, 306 de régulation du circuit 300 de transfert en position ouverte.

Le circuit 200 de refroidissement basse température reste alors en communication avec le circuit 100 de refroidissement pour apporter par l'intermédiaire du liquide de refroidissement des calories à l'aérotherme 110 du circuit 100 de refroidissement haute température.

Dans l'exemple de réalisation du système 10 de refroidissement, la circulation du liquide de refroidissement dans la deuxième conduite 212 dans laquelle est agencée la batterie 18 est contrôlée par la vanne 204 de régulation.

Selon une septième étape E7, lorsque la température du liquide de refroidissement circulant dans le circuit 200 de refroidissement basse température devient supérieure à la température de fonctionnement optimal de la batterie 18 haute tension, le procédé commande la vanne 204 de régulation en position fermée pour interrompre la circulation du liquide de refroidissement dans la deuxième conduite 212 comportant la batterie 18 haute tension.

L'interruption de la circulation dans la deuxième conduite 212 permet d'éviter que le liquide de refroidissement ne réchauffe la batterie 18 au-delà de la température optimale de fonctionnement.

Lorsque la première étape E1 de vérification est répétée et détermine que la température du liquide de refroidissement circulant dans le circuit 200 de refroidissement basse température est inférieure à ladite température (Tu) d'utilisation de la batterie 18 haute tension, le procédé de pilotage met alors en œuvre, alternativement à la sixième étape E6, une huitième étape E8.

La huitième étape E8 du procédé de pilotage consiste à maintenir le moteur 12 thermique en fonctionnement dès lors qu'une utilisation du véhicule hybride en mode électrique n'est pas possible en raison de la température de la batterie 18.

Les actions du procédé de pilotage correspondant au moins aux étapes E2 à E4 sont maintenues, les moyens 302, 306 de régulation et la vanne 204 sont respectivement en position ouverte et cela jusqu'à ce que la première étape E1 de vérification détermine que la batterie 18 a au moins atteint sa température (Tu) d'utilisation.

On a représenté à la figure 3, en fonction du temps t(s) porté an abscisse, différentes courbes qui sont respectivement identifiées par des numéros de [1] à [6].

La figure 3 illustre le fonctionnement d'un système 10 de refroidissement pour un véhicule hybride comportant un circuit de transfert de liquide de refroidissement, tel que décrit à la figure 1, lorsque ledit système 10 est commandé conformément à la stratégie du procédé de pilotage selon l'invention qui vient d'être décrite en référence à la figure 2.

La figure 3 illustre plus particulièrement les avantages de cette stratégie, notamment un gain G de temps obtenu pour pouvoir fonctionner en mode électrique après un démarrage réalisé en mode thermique et non pas en mode électrique en raison d'une température de batterie 18 insuffisante car inférieure à la température (Tu) d'utilisation.

Le gain G de temps obtenu sera mis en évidence grâce à la comparaison des courbes dont certaines comme les courbes [1] et [2] illustrent à cet effet l'évolution de la température du liquide de refroidissement en l'absence d'un circuit 300 de transfert et de moyens 302, 306 de régulation commandés conformément au procédé.

La courbe [1] représente, en fonction du temps t(s), l'évolution de la température T en (°C) du liquide de refroidissement dans un circuit 200 de refroidissement basse température.

Plus précisément, la courbe [1] illustre l'évolution de la température dans l'hypothèse d'un système 10 dépourvu de circuit 300 de transfert, c'est à dire avec un circuit 200 de refroidissement basse température qui ne serait pas relié ou serait à tout le moins isolé du circuit 100 de refroidissement haute température.

La courbe [2] représente, en fonction du temps t(s), l'évolution de la température T en (°C) du liquide de refroidissement dans un circuit 100 de refroidissement haute température.

Plus précisément, la courbe [2] illustre comme la courbe [1] l'évolution de la température dans l'hypothèse d'un système 10 de refroidissement sans circuit 300 de transfert, c'est à dire avec en fonctionnement seulement un circuit 100 de refroidissement haute température.

La courbe [3] représente l'évolution de la charge (en %) du moteur 14 électrique en mode hybride en fonction du temps t(s).

La courbe [4] représente, en fonction du temps t(s), l'évolution de la température T en (°C) du liquide de refroidissement dans le système 10 de refroidissement avec un circuit 100 de refroidissement haute température et un circuit 200 de refroidissement basse température mis en communication fluidique par le circuit 300 de transfert, les moyens 302, 306 de régulation étant en position ouverte.

Tel que représenté sur la figure 3, à l'instant t = 0 s, c'est à dire au moment du démarrage du véhicule hybride, les courbes [1], [2] et [4] de température sont en dessous d'une température égale à zéro (0°C), c'est à dire respectivement négatives.

La figure 3 illustre ainsi le cas précité d'un démarrage dans des conditions de température basses ou négatives ne permettant notamment pas un démarrage en mode électrique puisque la température de la batterie 18 est alors inférieure à la température (Tu) d'utilisation.

La courbe [5] représente, en fonction du temps t(s), l'évolution de la charge (en %) du moteur 12 thermique en mode thermique.

La courbe [6] représente, en fonction du temps t(s), l'évolution de la charge (en %) du moteur 14 électrique en mode électrique.

Sur la figure 3, on a identifié sous l'axe temporel des abscisses différentes phases de fonctionnement qui se succèdent chronologiquement, chacune des phases étant identifiées par un chiffre romain allant de I à II.

Tel que décrit en référence à la figure 2, lorsque la première étape E1 de vérification détermine la température du liquide de refroidissement dans le circuit 200 de refroidissement est inférieure à la température (Tu) d'utilisation de la batterie 18, on procède alors à un démarrage en mode thermique.

Selon les étapes E2 à E5, le procédé de pilotage comporte des actions destinées à établir une circulation de liquide de refroidissement à travers le circuit 300 de transfert dont les moyens 302, 306 de régulation sont pilotés en position ouverte afin de réaliser un transfert de calories du circuit 100 de refroidissement haute température vers le circuit 200 de refroidissement basse température pour aller réchauffer la batterie 18 et ce faisant atteindre plus rapidement ladite température (Tu) d'utilisation permettant un fonctionnement en mode électrique.

La première phase I correspond ainsi à une phase de montée en température progressive du liquide de refroidissement dans le circuit 200 de refroidissement basse température.

Lors de cette première phase I, la comparaison de la courbe [4] par rapport à la courbe [2] permet de constater que la température du liquide de refroidissement obtenue avec un circuit de transfert ouvert selon l'invention est supérieure à ce que serait la température du liquide de refroidissement en l'absence d'un tel circuit, c'est à dire avec un circuit 200 de refroidissement basse température seul.

La température du liquide de refroidissement étant plus élevée avec l'invention, on comprend que le réchauffage de la batterie 18 va être accélérée et la température (Tu) d'utilisation atteinte plus rapidement.

Le point A sur la courbe [4] correspond à l'atteinte par le liquide de refroidissement de la température (Tu) d'utilisation avec un transfert de calories obtenu en commandant un système 10 de refroidissement selon la figure 1, tandis que le point B sur la courbe [2] correspond à l'atteinte par le liquide de refroidissement de cette même température (Tu) d'utilisation en l'absence de transfert de calories, c'est à dire sans circuit 300 de transfert.

Par comparaison, on constate que le point A précède le point B, l'écart entre les deux points A et B correspondant au gain G de temps obtenu grâce à l'invention.

En effet, il est alors avantageusement possible d'utiliser le véhicule en mode électrique dès le point A, ce qui correspond à la phase II représentée sur la figure 3.

## Revendications

1. Procédé de pilotage d'un système (10) de refroidissement pour un véhicule hybride comportant au moins un moteur (12) thermique et un moteur (14) électrique, le système (10) de refroidissement comportant au moins :
- un circuit (100) de refroidissement haute température pour refroidir le moteur (12) thermique et un circuit (200) de refroidissement basse température pour refroidir le moteur (14) électrique et une batterie (18) haute tension associée, et
- un circuit (300) de transfert de liquide de refroidissement reliant le circuit (100) de refroidissement haute température et le circuit (200) de refroidissement basse température et comportant des moyens (302, 306) de régulation pour contrôler la circulation du liquide de refroidissement dans le circuit (300) de transfert, **caractérisé en ce que** le procédé de pilotage du système (10) de refroidissement comporte, lors d'un démarrage du véhicule, au moins :
- une première étape (E1) consistant à vérifier si le liquide de refroidissement présent dans le circuit (200) de refroidissement basse température est à une température inférieure à une température (Tu) d'utilisation de la batterie (18) haute tension du moteur (14) électrique ;
- lorsque la température du liquide de refroidissement dans le circuit (200) de refroidissement basse température est inférieure à la température (Tu) d'utilisation de la batterie (18), une deuxième étape (E2) consistant à démarrer le moteur (12) thermique ;
- une troisième étape (E3) consistant à commander en position ouverte les moyens (302, 306) de régulation du circuit (300) de transfert pour, en établissant une circulation de liquide de refroidissement entre le circuit (100) de refroidissement haute température et le circuit (200) de refroidissement basse température, accélérer une montée en température du liquide de refroidissement dans le circuit (200) de refroidissement basse température afin de réchauffer la batterie (18) jusqu'à atteindre au moins ladite température (Tu) d'utilisation.

2. Procédé selon la revendication 1, **caractérisé en ce que**, lorsque le moteur (12) thermique est démarré à la deuxième étape (E2), le procédé de pilotage démarre au moins une pompe (106) associée au moteur (12) thermique.

3. Procédé selon la revendication 1 ou 2, **caractérisé en ce que** le procédé de pilotage comporte une étape (E4) consistant à ouvrir une vanne (204) de régulation destinée à contrôler la circulation du liquide de refroidissement dans une conduite (212) comportant la batterie (18) haute tension associée au moteur (14) électrique.

4. Procédé selon l'une quelconque des revendications 1 à 3, **caractérisé en ce que** le procédé de pilotage comporte une étape (E5) consistant à démarrer au moins une pompe (215) agencée dans une boucle (214) de refroidissement du circuit (200) de refroidissement basse température.

5. Procédé selon l'une quelconque des revendications 1 à 4, **caractérisé en ce que** le procédé de pilotage comporte une étape (E5) consistant à démarrer au moins une pompe (228) agencée dans une autre boucle (222) de refroidissement du circuit (200) de refroidissement basse température.

6. Procédé selon l'une quelconque des revendications 1 à 5, **caractérisé en ce que** la première étape (E1) de vérification de la température du liquide de refroidissement circulant dans le circuit (200) de refroidissement est effectuée de manière itérative.

7. Procédé selon la revendication 6, **caractérisé en ce que** si la température du liquide de refroidissement circulant dans le circuit (200) de refroidissement basse température est inférieure à ladite température (Tu) d'utilisation de la batterie (18) haute tension, le procédé de pilotage maintient alors au moins le moteur (12) thermique en fonctionnement et les moyens (302, 306) de régulation du circuit (300) de transfert en position ouverte.

8. Procédé selon la revendication 7 prise en combinaison avec la revendication 3, **caractérisé en ce que** si la température du liquide de refroidissement circulant dans le circuit (200) de refroidissement basse température est inférieure à ladite température (Tu) d'utilisation de la batterie (18) haute tension, le procédé de pilotage maintient alors la vanne (204) de régulation en position ouverte.

9. Procédé selon la revendication 6, **caractérisé en ce que** si la température du liquide de refroidissement circulant dans le circuit (200) de refroidissement basse température est supérieure ou égale à ladite température (Tu) d'utilisation de la batterie (18) haute tension et que la charge de la batterie (18) est suffisante, le procédé de pilotage éteint alors le moteur (12) thermique et démarre le moteur (14) électrique pour un roulage du véhicule en mode électrique.

10. Procédé selon la revendication 9, **caractérisé en ce que**, lors du démarrage du moteur (14) électrique, le procédé de pilotage comporte une étape (E6) consistant à commander sélectivement les moyens (302, 306) de régulation du circuit (300) de transfert en position fermée ou en position ouverte.

11. Procédé selon la revendication 9, **caractérisé en ce que**, lors du démarrage du moteur (14) électrique, le procédé de pilotage maintient les moyens (302, 306) de régulation du circuit (300) de transfert en position ouverte lorsque une demande de chauffage existe afin d'apporter des calories à un aérotherme (110) que comporte le circuit (100) de refroidissement haute température.

12. Procédé selon la revendication 9, **caractérisé en ce que**, lorsque la température du liquide de refroidissement circulant dans le circuit (200) de refroidissement basse température est supérieure à une température de fonctionnement optimal de la batterie (18) haute tension, le procédé de pilotage comporte alors une étape (E7) consistant à commander la vanne (204) de régulation en position fermée pour interrompre la circulation du liquide de refroidissement dans la deuxième conduite (212) comportant la batterie (18) haute tension.

## Patentansprüche

1. Steuerungsverfahren eines Kühlsystems (10) für ein Hybridfahrzeug, das mindestens einen Verbrennungsmotor (12) und einen Elektromotor (14) aufweist, wobei das Kühlsystem (10) wenigstens Folgendes aufweist:
- einen Hochtemperatur-Kühlkreislauf (100) zur Kühlung des Verbrennungsmotors (12) und einen Niedrigtemperatur-Kühlkreislauf (200) zur Kühlung des Elektromotors (14) und eine zugehörige Hochspannungsbatterie (18), und
- einen Kreislauf (300) zur Übertragung von Kühlflüssigkeit, der den Hochtemperatur-Kühlkreislauf (100) und den Niedrigtemperatur-Kühlkreislauf (200) verbindet und Regulierungsmittel (302, 306) aufweist, um die Zirkulation der Kühlflüssigkeit im Übertragungskreislauf (300) zu steuern,
**dadurch gekennzeichnet, dass** das Steuerungsverfahren des Kühlsystems (10) bei einem Start des Fahrzeugs wenigstens Folgendes aufweist:
- einen ersten Schritt (E1), der darin besteht, zu überprüfen, ob die Kühlflüssigkeit, die im Niedrigtemperatur-Kühlkreislauf (200) vorhanden ist, eine Temperatur aufweist, die niedriger als eine Gebrauchstemperatur (Tu) der Hochspannungsbatterie (18) des Elektromotors (14) ist;
- wenn die Temperatur der Kühlflüssigkeit im Niedrigtemperatur-Kühlkreislauf (200) niedriger als die Gebrauchstemperatur (Tu) der Batterie (18) ist, einen zweiten Schritt (E2), der darin besteht, den Verbrennungsmotor (12) zu starten;
- einen dritten Schritt (E3), der darin besteht, die die Regulierungsmittel (302, 306) des Übertragungskreislaufs (300) in die offene Position zu steuern, um durch Herstellung einer Zirkulation von Kühlflüssigkeit zwischen dem Hochtemperatur-Kühlkreislauf (100) und dem Niedrigtemperatur-Kühlkreislauf (200) einen Temperaturanstieg der Kühlflüssigkeit im Niedrigtemperatur-Kühlkreislauf (200) zu beschleunigen, um die Batterie (18) zu erwärmen, bis wenigstens die Gebrauchstemperatur (Tu) erreicht ist.

2. Verfahren nach Anspruch 1, **dadurch gekennzeichnet, dass**, wenn der Verbrennungsmotor (12) beim zweiten Schritt (E2) gestartet wird, das Steuerungsverfahren mindestens eine Pumpe (106) startet, die dem Verbrennungsmotor (12) zugeordnet ist.

3. Verfahren nach Anspruch 1 oder 2, **dadurch gekennzeichnet, dass** das Steuerungsverfahren einen Schritt (E4) aufweist, der darin besteht, ein Regelventil (204) zu öffnen, das dazu bestimmt ist, die Zirkulation der Kühlflüssigkeit in einer Leitung (212) zu steuern, die die Hochspannungsbatterie (18) aufweist, die dem Elektromotor (14) zugeordnet ist.

4. Verfahren nach einem der Ansprüche 1 bis 3, **dadurch gekennzeichnet, dass** das Steuerungsverfahren einen Schritt (E5) aufweist, der darin besteht, mindestens eine Pumpe (215) zu starten, die in einer Kühlschleife (214) des Niedrigtemperatur-Kühlkreislaufs (200) angeordnet ist.

5. Verfahren nach einem der Ansprüche 1 bis 4, **dadurch gekennzeichnet, dass** das Steuerungsverfahren einen Schritt (E5) aufweist, der darin besteht, mindestens eine Pumpe (228) zu starten, die in einer anderen Kühlschleife (222) des Niedrigtemperatur-Kühlkreislaufs (200) angeordnet ist.

6. Verfahren nach einem der Ansprüche 1 bis 5, **dadurch gekennzeichnet, dass** der erste Schritt (E1) des Überprüfens der Temperatur der Kühlflüssigkeit, die im Kühlkreislauf (200) zirkuliert, iterativ durchgeführt wird.

7. Verfahren nach Anspruch 6, **dadurch gekennzeichnet, dass**, wenn die Temperatur der Kühlflüssigkeit, die im Niedrigtemperatur-Kühlkreislauf (200) zirkuliert, niedriger als die Gebrauchstemperatur (Tu) der Hochspannungsbatterie (18) ist, das Steuerungsverfahren wenigstens den Verbrennungsmotor (12) in Betrieb und die Regulierungsmittel (302, 306) des Übertragungskreislaufs (300) in offener Position hält.

8. Verfahren nach Anspruch 7 in Kombination mit Anspruch 3, **dadurch gekennzeichnet, dass**, wenn die Temperatur der Kühlflüssigkeit, die im Niedrigtemperatur-Kühlkreislauf (200) zirkuliert, niedriger als die Gebrauchstemperatur (Tu) der Hochspannungsbatterie (18) ist, das Steuerungsverfahren das Regelventil (204) in offener Position hält.

9. Verfahren nach Anspruch 6, **dadurch gekennzeichnet, dass**, wenn die Temperatur der Kühlflüssigkeit, die im Niedrigtemperatur-Kühlkreislauf (200) zirkuliert, höher als die Gebrauchstemperatur (Tu) der Hochspannungsbatterie (18) oder gleich dieser ist und die Ladung der Batterie (18) ausreichend ist, das Steuerungsverfahren den Verbrennungsmotor (12) abschaltet und den Elektromotor (14) für ein Fahren des Fahrzeugs im elektrischen Modus startet.

10. Verfahren nach Anspruch 9, **dadurch gekennzeichnet, dass** beim Start des Elektromotors (14) das Steuerungsverfahren einen Schritt (E6) aufweist, der darin besteht, die Regulierungsmittel (302, 306) des Übertragungskreislaufs (300) selektiv in die geschlossene Position oder die offene Position zu steuern.

11. Verfahren nach Anspruch 9, **dadurch gekennzeichnet, dass** beim Start des Elektromotors (14) das Steuerungsverfahren die Regulierungsmittel (302, 306) des Übertragungskreislaufs (300) in offener Position hält, wenn eine Heizanforderung vorliegt, um einem Lufterwärmer (110), den der Hochtemperatur-Kühlkreislauf (100) aufweist, Kalorien zuzuführen.

12. Verfahren nach Anspruch 9, **dadurch gekennzeichnet, dass**, wenn die Temperatur der Kühlflüssigkeit, die im Niedrigtemperatur-Kühlkreislauf (200) zirkuliert, höher als eine optimale Betriebstemperatur der Hochspannungsbatterie (18) ist, das Steuerungsverfahren einen Schritt (E7) aufweist, der darin besteht, das Regelventil (204) in die geschlossene Position zu steuern, um die Zirkulation der Kühlflüssigkeit in der zweiten Leitung (212), die die Hochspannungsbatterie (18) aufweist, zu unterbrechen.

## Claims

1. Method for operating a cooling system (10) for a hybrid vehicle comprising at least a combustion engine (12) and an electric motor (14), the cooling system (10) comprising at least:
- a high-temperature cooling circuit (100) for cooling the combustion engine (12) and a low-temperature cooling circuit (200) for cooling the electric motor (14) and an associated high-voltage battery (18), and
- a liquid-coolant transfer circuit (300) connecting the high-temperature cooling circuit (100) and the low-temperature cooling circuit (200) and comprising regulating means (302, 306) for controlling the circulation of the liquid coolant in the transfer circuit (300),
**characterized in that** the method for operating the cooling system (10) comprises, upon starting the vehicle, at least:
- a first step (E1) consisting in checking whether the liquid coolant present in the low-temperature cooling circuit (200) is at a temperature below a working temperature (Tu) of the high-voltage battery (18) of the electric motor (14);
- when the temperature of the liquid coolant in the low-temperature cooling circuit (200) is below the working temperature (Tu) of the battery (18), a second step (E2) consisting in starting the combustion engine (12) ;
- a third step (E3) consisting in commanding the regulating means (302, 306) that regulate the transfer circuit (300) into the open position in order, by establishing a circulation of liquid coolant between the high-temperature cooling circuit (100) and the low-temperature cooling circuit (200), to accelerate a rise in temperature of the liquid coolant in the low-temperature cooling circuit (200) so as to warm up the battery (18) until it reaches at least said working temperature (Tu).

2. Method according to Claim 1, **characterized in that** when the combustion engine (12) is started in the second step (E2), the operating method starts at least a pump (106) associated with the combustion engine (12).

3. Method according to Claim 1 or 2, **characterized in that** the operating method comprises a step (E4) consisting in opening a regulating valve (204) intended to control the circulation of the liquid coolant in a pipe (212) comprising the high-voltage battery (18) associated with the electric motor (14).

4. Method according to any one of Claims 1 to 3, **characterized in that** the operating method comprises a step (E5) consisting in starting at least a pump (215) located in a cooling loop (214) of the low-temperature cooling circuit (200).

5. Method according to any one of Claims 1 to 4, **characterized in that** the operating method comprises a step (E5) consisting in starting at least a pump (228) located in another cooling loop (222) of the low-temperature cooling circuit (200).

6. Method according to any one of Claims 1 to 5, **characterized in that** the first step (E1) of verifying the temperature of the liquid coolant circulating in the cooling circuit (200) is performed iteratively.

7. Method according to Claim 6, **characterized in that** if the temperature of the liquid coolant circulating in the low-temperature cooling circuit (200) is below said working temperature (Tu) of the high-voltage battery (18), the operating method then keeps at least the combustion engine (12) running and the regulating means (302, 306) that regulate the transfer circuit (300) in the open position.

8. Method according to Claim 7 considered in combination with Claim 3, **characterized in that** if the temperature of the liquid coolant circulating in the low-temperature cooling circuit (200) is below said working temperature (Tu) of the high-voltage battery (18), the operating method then keeps the regulating valve (204) in the open position.

9. Method according to Claim 6, **characterized in that** if the temperature of the liquid coolant circulating in the low-temperature cooling circuit (200) is above or equal to said working temperature (Tu) of the high-voltage battery (18), and if the charge in the battery (18) is sufficient, the operating method then switches off the combustion engine (12) and starts the electric motor (14) so that the vehicle runs in electric mode.

10. Method according to Claim 9, **characterized in that**, when starting the electric motor (14), the operating method comprises a step (E6) consisting in selectively commanding the regulating means (302, 306) that regulate the transfer circuit (300) into a closed position or into an open position.

11. Method according to Claim 9, **characterized in that**, when starting the electric motor (14), the operating method keeps the regulating means (302, 306) that regulate the transfer circuit (300) in the open position when there is a demand for heating so as to supply heat energy to a unit heater (110) that the high-temperature cooling circuit (100) comprises.

12. Method according to Claim 9, **characterized in that**, when the temperature of the liquid coolant circulating in the low-temperature cooling circuit (200) is above an optimum operating temperature for the high-voltage battery (18), the operating method then comprises a step (E7) consisting in commanding the regulating valve (204) into the closed position in order to interrupt the circulation of the liquid coolant in the second pipe (212) comprising the high-voltage battery (18).
